# EUROPEAN PATENT APPLICATION

(11) **EP 1 850 129 A1**
(43) Date of publication of application: **31.10.2007**
(21) Application number: 06125668.1
(22) Date of filing: 08.12.2006
(51) Int. Cl.: G01N 30/32, G01N 30/46

(54) **Fluid separation system with multiple flow channels**

(71) Applicant: Agilent Technologies, Inc., Santa Clara, CA 95051 (US)
(72) Inventor: Witt, Klaus, 75210, Keltern (DE)
(74) Representative: Barth, Daniel Mathias

(57) **Abstract**

A fluidic system (1) has a flow source (13) adapted for delivering a fluid, a plurality of flow channels (3), each being adapted for providing a fluid separation and being arranged downstream of the flow source, a flow meter (11) adapted for determining a fluid flow in at least one of the flow channels and being arranged downstream of the at least one of the flow channels, and a control unit (17) adapted for controlling the fluid flow in the at least one of the flow channels in response to the determined fluid flow.

## Description

### BACKGROUND ART

The present invention relates to a fluid separation system.

Fluid separation systems are known in the art and can be used, for example, for executing a high throughput high performance chromatography process. The US 6,743,356 B1 shows a high throughput high performance chromatography system comprising a plurality of flow control valves. The US 6,911,151 B1 relates to a device and a method for separating substances by liquid chromatography. The US 6,532,978 B1 shows a method and a device for regulating individual subflows of a conveying system while the main flow is conveyed in a constant manner.

### DISCLOSURE

It is an object of the invention to provide an improved fluid separation. The object is solved by the independent claim(s). Further embodiments are shown by the dependent claim(s).

According to embodiments of the present invention, a fluid separation system is suggested. The fluid separation system comprises a flow source adapted for delivering a fluid, a plurality of flow channels, each being adapted for providing a fluid separation and being arranged downstream of the flow source, a flow meter adapted for determining a fluid flow in at least one of the flow channels and being arranged downstream of the at least one of the flow channels, and a control unit adapted for controlling the fluid flow in the at least one of the flow channels in response to the determined fluid flow. Advantageously, the flow in the at least one of the flow channels can be adjusted by the control unit. Therefore, the control unit can control the fluid flow in response to the determined or measured fluid flow. Advantageously, by this, any undesired side effects affecting a desired constant flow within the flow channels can be compensated by controlling the fluid flow. Such side effects can result, for example, from mixing two liquids, wherein pressure drops or pressure increases and/or changes in the viscosity can occur. Advantageously, the flow within the at least one flow channel can be defined as a controlled quantity. Besides this, the total volume can be defined as a second controlled quality. The total volume can be determined under the premise of a constant and/or known pressure by integrating the signal of the flow meter. Advantageously, by controlling the total volume as a controlled quantity, any differences in the viscosity of the fluid conducted within the flow channels can be compensated.

Embodiments may comprise one or more of the following. The flow meter can comprise a measuring chamber adapted for running or drawing in a defined volume per time for determining the fluid flow. By this, the flow meter can act like a volumetric displacement flow meter, wherein the displaced volume determines the flow to be measured.

Embodiments may comprise one ore more of the following. A drawing rate of the flow meter can be controlled by the control unit for determining the fluid flow. Advantageously, by this, the flow meter can be designed less retroactive to the fluid flow to be measured. Advantageously, the energy for displacing the volume of the measuring chamber can be applied to the system by the control unit or rather by according control elements controlled by the control unit.

Embodiments may comprise one or more of the following. An actual volume of the measuring chamber can be controlled by the control unit for controlling the drawing rate. By this, for example, any moving parts used for adjusting the actual volume of the measuring chamber can be adjusted by the control unit. For this purpose, the flow meter can comprise a syringe or a piston type flow meter controlled by the control unit. Advantageously, the movement of the according distance gives the drawing rate and consequently the fluid flow to be measured and/or controlled.

Embodiments may comprise one or more of the following. Each of the flow channels can comprise a variable flow restrictor, each controlled by the control unit in response to the determined fluid flow or fluid flows. Each of the flow channels can be adapted for executing a separate fluid separation process. Consequently, a plurality of different samples can be executed in parallel. Therefore, in each of the flow channels occur different conditions or rather side effects. Advantageously, such different side effects affecting the desired constant flow can be compensated by controlling the single flows in response to the determined fluid flows by controlling the variable flow restrictors by the control unit. Advantageously, the flow restrictors can realize control elements of a plurality of closed loop control circuits for controlling the fluid flow in the single flow channels.

Embodiments may comprise one or more of the following. Each of the variable flow restrictors can comprise a valve with an adjustable throttle, and/or a chopper valve, of which a duty cycle defined net restriction, and/or a heat controlled hydraulic restrictor. For restricting the flows within the flow channels, the throttles can be accordingly controlled by the control unit. The heat controlled hydraulic restrictors can comprise a heatable restriction, for example by an electric current. Due to the changes of the viscosity over the temperature, the fluid flow can be controlled by heating and/or cooling the heat controlled hydraulic restrictors. Advantageously, the heat controlled hydraulic restrictors comprise no moving parts. Advantageously, controlling an electric current for heating the restrictor directly affects the hydraulic resistance.

Embodiments may comprise one or more of the following. The flow channels can comprise a sample injector, a chromatography column and/or a detector. By these elements, each of the flow channels can be adapted for executing the separation process.

Embodiments may comprise one or more of the following. The fluid separation system can comprise a multiplexer arranged downstream of the flow channels and coupled to each of the flow channels. A single flow meter can be arranged downstream of the multiplexer. Advantageously, the multiplexer can connect the flow channels by time slicing to the single flow meter. By this, with one single flow meter, one flow channel after the other can be coupled to the flow meter, wherein the flow of each of the flow channels can be determined. For obtaining a good measurement, the time slices should be longer than the transient time of the system or rather of the according flow channel coupled via the multiplexer to the flow meter. Alternatively, some or all of the flow channels can comprise a single flow meter. By this, the single flows in the according flow channels can be continuously determined.

Embodiments may comprise one or more of the following. Some or all of the flow channels coupled to the multiplexer can comprise buffer chambers. The buffer chambers can be coupled upstream of the multiplexer. Advantageously, the buffer chambers can store the liquid delivered by the single flow channels, when they are not connected to the single flow meter via the multiplexer. Advantageously, in each cycle of the multiplexer, each of the buffer chambers can be drained off completely into the flow meter. By this, a continuous flow within the single flow channels can be back-calculated. Therefore, the flow meter can determine for each time slice a total volume. For determining the flow, the total volume can be divided by the sum of the total of time slices per cycle, which may be identical to the period of measurements on this flow channel.

Further embodiments of the invention relate to a method of controlling a fluid separation system, for example, a fluid separation system as described above. The fluid flow in at least one of the flow channels can be determined by the flow meter. The fluid flow in at least one of the flow channels can be controlled in response to the determined fluid flow. Advantageously, any occurring side effects affecting the desired fluid flow can be compensated.

Embodiments may comprise one or more of the following. A defined volume per time can be run or drawn into a measuring chamber of the flow meter for determining the fluid flow. Advantageously, the volume per time of the measuring chamber displaced by the flow delivered by the flow channels can be used for determining the fluid flow.

Embodiments may comprise one or more of the following. The fluid flow can be determined by controlling a drawing rate of the flow meter by the control unit. Advantageously, under the premise of a constant and/or known pressure of the fluid, the drawing rate can be used for determining and/or calculating the fluid flow.

Embodiments may comprise one or more of the following. The drawing rate can be controlled by controlling an actual volume of the measuring chamber by the control unit. The actual volume of the measuring chamber is equivalent to the volume delivered by the flow channel. Advantageously, by this, the actual volume can serve as a manipulated variable of a closed loop control circuit of the flow meter. Advantageously, this manipulated variable can be used for back-calculating the drawing rate and consequently the fluid flow of the flow channel coupled to the flow meter.

Embodiments may comprise one or more of the following. Variable flow restrictors of each of the flow channels can be controlled in response to the determined fluid flow or rather fluid flows. Advantageously, the variable flow restrictors can serve as control elements of a closed loop control circuit for the fluid flow or rather fluid flows of the flow channels.

Embodiments may comprise one or more of the following. The fluid flows of the plurality of flow channels can be multiplexed into an outlet of the multiplexer, wherein the multiplexer is arranged downstream of the flow channels. The flow rate of the outlet of the multiplexer can be measured by the flow meter arranged downstream of the multiplexer and coupled to the outlet of the multiplexer. By this, one flow channel after the other can be connected to the flow meter for measuring the flow within the flow channel actually connected to the flow meter. Alternatively, the flow rate can be measured by a plurality of flow meters, wherein each flow channel comprises one of the flow meters. Advantageously, by this, the flows of all flow channels can be measured continuously in parallel.

Further embodiments of the invention relate to a fluidic system.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling a fluid separation system as described above, for example for controlling the fluid flow or rather the fluid flows in the flow channels of the system and/or for determining the fluid flow of the flow channels by the flow meter or by the plurality of flow meters. For this purpose, the software can be used for controlling and/or for providing according control routines, for example, for the flow meter.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a fluid separation system with a plurality of flow channels each coupled to a flow meter,

Fig. 2 shows a fluid separation system, comprising a plurality of flow channels, each coupled via a multiplexer to a single flow meter, and

Fig. 3 shows exemplarily a detailed view of a flow channel of the fluid separation system of Fig. 1 or Fig. 2 adapted for providing a fluid separation.

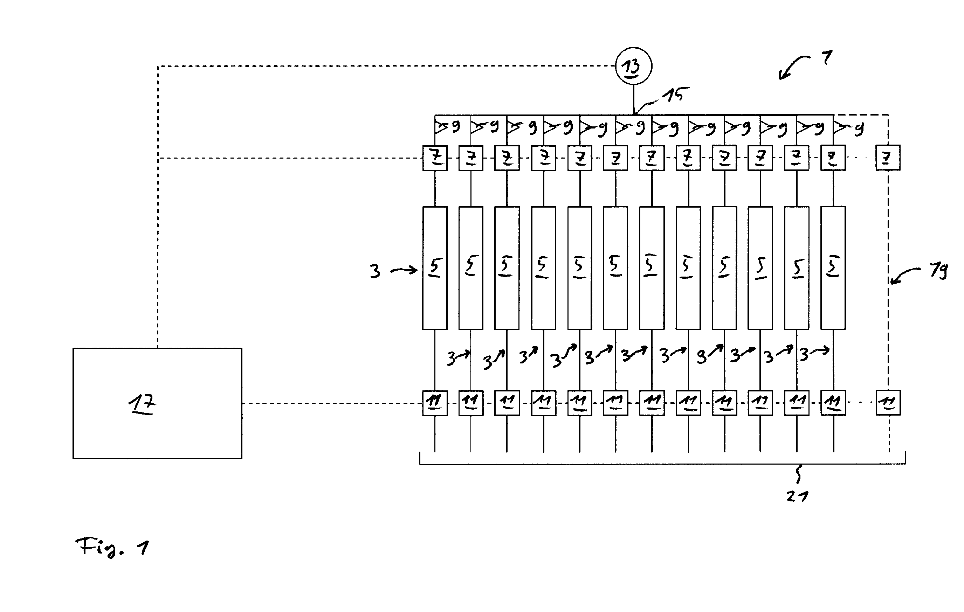

Fig. 1 shows a fluid separation system 1 comprising a plurality of 12 flow channels 3. The number of flow channels can vary, for example comprise a number of more than 1 flow channels, for example between 8 and 12 flow channels, for example up to 96 flow channels or more. Each of the flow channels 3 comprises a fluid separation unit 5 adapted for providing a fluid separation. Besides this, each of the flow channels 3 comprises a variable flow restrictor 7 adapted for influencing or controlling a fluid flow of the according flow channel 3. Upstream of the flow restrictors 7, each of the flow channels 3 comprises a sample injector 9. In embodiments, the sample injectors 9 can be arranged downstream of the flow restrictors 7. Advantageously, any undesired dispersion of the sample can be avoided by arranging the sample injectors as close to the fluid separation units 5 as possible. The sample injectors 9 are adapted for injecting a sample into the according flow channel to be analyzed by the according fluid separation unit 5. Each of the sample injectors 9 is adapted for injecting different samples. Consequently, the fluid separation system 1 of Fig. 1 is adapted for analyzing 12 different samples in parallel. The fluid separation units 5 are arranged downstream of the sample injectors 9 and the variable flow restrictors 7. Furthermore, each of the flow channels 3 comprises a flow meter 11, wherein the flow meters 11 are arranged downstream of the according fluid separation units 5. All flow channels 3 are coupled to a common flow source 13. The flow channels 3 are arranged downstream of the flow source 13 and each coupled to the flow source 13 via a multibranch 15. The multibranch 15 is adapted for dividing a fluid flow delivered by the flow source 13 in single fluid flows of the flow channels 3. By this, the flow source 13 can supply all flow channels 3 with a fluid, for example a mobile phase for executing a fluid separation with the fluid separation units 5.

The flow restrictors 7 can comprise, for example, a heat controlled hydraulic restrictor. Advantageously, by this, the sample injectors 9 can be arranged upstream of the variable flow restrictors 7 without or with less affecting the quality of a gradient delivered by the flow source 13. For delivering such a gradient, for example, comprising a variable composition of water and acetonitrile, the flow source 13 can comprise two metering pumps, for example piston or syringe type pumps adapted for metering exact fluid flows and compositions under high pressure condition. By mixing the gradient or rather the composition of different liquids and the sample, undesired side effects affecting an exact fluid flow of the different flow channels 3 can occur. By this, each of the flow channels 3 can comprise different conditions differently affecting the according fluid flow. For compensating such undesired variations in the fluid flows, the variable flow restrictors 7 of the flow channels 3 are coupled to a control unit 17. The control unit 17 is adapted for controlling the fluid flow of the flow channels 3 in a closed loop manner. For this purpose, the control unit 17 gets the signals of the flow meters 11 of the flow channels 3. By this, the control unit 17, the variable flow restrictors 7, the flow channels 3, and the flow meters 11 can realize a plurality of closed loop control circuits for controlling the different fluid flows of the flow channels 3.

Additionally, the control unit 7 can be coupled to the flow source 13, for example, for controlling the fluid flow and/or the composition of the fluid flow delivered by the flow source 13 to the single flow channels 3.

In embodiments, the fluid separation system 1 can comprise a reference flow channel 19. The reference flow channel 19 comprises just a variable flow restrictor 7 and a flow meter 11. In other words, the reference flow channel 19 comprises no fluid separation unit 5 and consequently a comparatively low hydraulic resistance. The reference flow channel 19 can be used for trimming the flow source 13 by measuring the fluid flow within the reference flow channel 19 by the flow meter 11 of the reference flow channel 19. In the reference mode, all variable flow restrictors 7 of the flow channels 3 can be closed and the variable flow restrictor 7 of the reference flow channel 19 can be opened, and reversed for normally operating the fluid separation system 1.

The flow channels 3 and the reference channel 19 or rather the flow meters 11 of the flow channels 3 and 19 can be coupled to a waste 21.

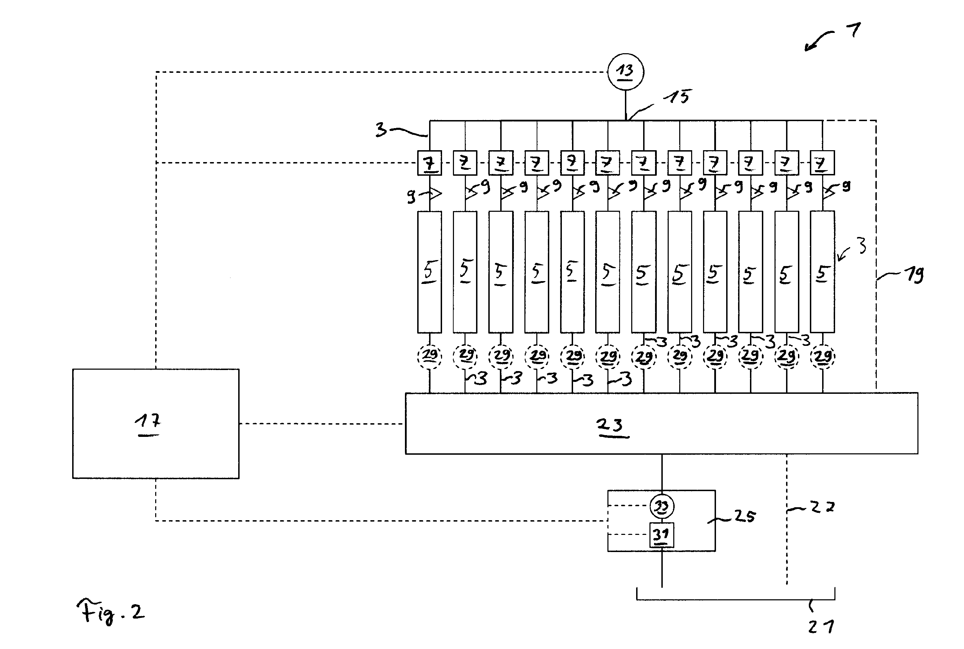

Fig. 2 shows a fluid separation system 1 comprising a multiplexer 23. The multiplexer 23 can be controlled by the control unit 17 of the fluid separation system 1. The fluid separation system 1 of Fig. 2 is similarly designed as the fluid separation system 1 of Fig. 1. Therefore, just the differences are described in detail as follows. The fluid separation system 1 of Fig. 2 comprises just one common flow meter 25 arranged downstream of the multiplexer 23 and coupled to a multiplexer outlet of the multiplexer 23. The flow meter 25 is coupled to and controlled by the control unit 17 and adapted for measuring a fluid flow delivered by the multiplexer 23. The multiplexer 23 is arranged downstream of the plurality of flow channels 3 and of the reference flow channel 19. The multiplexer 23 is adapted for coupling the flow channels 3 in an arbitrary pattern, for example one after the other, to the flow meter 25. By this time slicing, the flow meter 25 can determine the fluid flows of all of the flow channels 3. In embodiments, for every time slice, just one of the flow channels 3 is coupled to the flow meter 25, wherein all the others flow channels 3 are coupled via an waste channel 27 to the waste 21. Advantageously, the time slices can be longer than the transient of the fluid separation system 1 or rather of each of the flow channels 3 of the fluid separation system 1. After the transient, the flow meter 25 can determine the flow of the according flow channel 3. By this, for each time slice, the control unit 17 can adjust the flow of the according flow channel 3 by controlling the according variable flow restrictor 7 of the according flow channel 3. Possibly, each of the channels 3 can comprise different pressure conditions, wherein after each step of the multiplexer 23 a separate transient happens for adapting the flow meter 25 to the actual pressure of the coupled flow channel 3. Advantageously, the channels 3 can comprise similar pressure conditions reducing the transient time.

In embodiments, some or each of the flow channels 3 can comprise buffer chambers 29. The buffer chambers 29 can comprise, for example, elastic membranes or alike and can be adapted for buffering a certain amount of liquid delivered by the flow channels 3. For this purpose, the flow channels 3 being not coupled to the flow meter 25 via the multiplexer 23 can be closed by the multiplexer 23. In other words, these flow channels 3 are not coupled to the waste 21. When coupled to the flow meter 25, the complete volume delivered by the according flow channel 3 and stored within the buffer chamber 29 can be let into the multiplexer 23 and consequently into the flow meter 25. Advantageously, for this purpose, the flow meter 25 can be adapted for determining a certain volume drawn or run into the flow meter 25. Advantageously, by this, the volume delivered by the single flow channels 3 can be a controlled variable of the closed loop control circuits.

For determining such a volume and/or a flow, the flow meter 25 can comprise a measuring chamber 31, wherein the volume of the measuring chamber 31 gives the volume drawn or run into the measuring chamber 31 of the flow meter 25. Additionally, the flow meter 25 can comprise a pressure sensor 33 adapted for measuring the pressure within the flow channel 3 coupled to the flow meter 25 and/or the pressure within the measuring chamber 31 of the flow meter 25. Under the premise of a known and/or constant pressure within the measuring chamber 31, the actual volume of the measuring chamber can be used for calculating the volume and/or the flow delivered by the coupled flow channel 3. For this purpose, the control unit 17 is coupled to the pressure sensor 33 and to the measuring chamber 31. Advantageously, the control unit 17, the pressure sensor 33 and the measuring chamber 31 can realize a closed loop control circuit. This closed loop control circuit can be adapted for controlling the fluid flow run or drawn into the measuring chamber 31. Besides this, the actual volume of the measuring chamber 31 can be controlled by the control unit 17. Advantageously, the defined volume to be run or drawn in per time or a drawing rate of the flow meter 25 can be used for calculating or rather for measuring the volume or the fluid flow delivered by the flow channels. Such a flow meter 25 is described in a not-published Patent-Application by the same applicant with the internal filing number 20060400-1, incorporated, in particular the Fig. and the according description, in this application by reference.

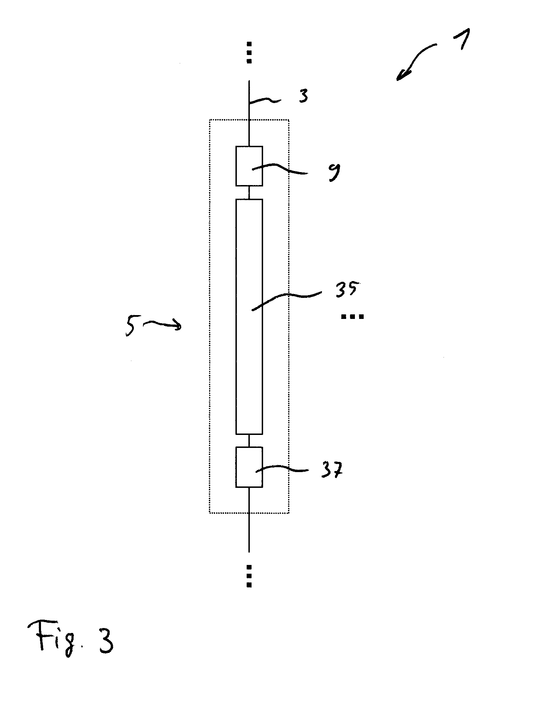

Fig. 3 shows a fluid separation unit 5 adapted for providing a fluid separation. Each of the flow channels 3 of the fluid separation systems 1 of Fig. 1 and/or 2 can comprise, for example, such a fluid separation unit 5. The fluid separation unit 5 of Fig. 3 comprises a flow channel 3 with a sample injector 9, a chromatography column 35 and a detector 37. The injector 9 is coupled upstream of the column 35 and the detector 37 is coupled downstream of the column 35 to the column 35. The detector 37 is adapted for detecting components of the sample injected by the sample injector 9 and separated by the column 35 by a liquid chromatography process, for example a high performance liquid chromatography process executed by the fluid separation unit 5. The detector 37 can comprise, for example, an optical detector, an electrical detector, and/or other known detectors adapted for detecting components of a sample.

Advantageously, as shown in Fig. 2, one single flow meter, for example a comparably expensive and exactly working flow meter can be used for controlling the flows of a plurality of flow channels 3.

Advantageously, a measuring pressure or control pressure of the flow meter 25 can be varied in each switching state or rather for each time slice of the multiplexer 23.

As shown in Fig. 2, the sample injectors 9 can be arranged downstream of the variable flow restrictors 7. Advantageously, by this, variable flow restrictors possibly affecting the composition of the fluid flow and the injected sample can be used. Such variable flow restrictors 7 can comprise, for example a valve with a throttle, for example, adjusted by magnetic forces and controlled by the control unit 17.

Alternatively, a heated hydraulic resistor, comprising a good damping rate can be used at an arbitrary position upstream of the columns 35 of the fluid separation units 5 of the flow channels 3.

The multiplexer 23 can comprise a rotating disc or a manipulated slider with according flow channels adapted for multiplexing the fluid flows delivered by the flow channels 3. As materials, polished ceramics or according polymeric materials or plastic materials, for example, polyetheretherketone (PEEK) can be used.

The control circuits of the control unit 17 can be adapted for controlling the fluid flow and/or the volume delivered by the flow channels 3 as controlled condition or conditions. Advantageously, by controlling the volume, any differences of the viscosity can be adjusted.

The time slices of the multiplexer 23 can be, for example, 5 times longer than the transient of the fluid separation system 1. For this purpose, the system clock of the control unit 17 can be adjusted between a value of 20 - 150 Hz

In embodiments, the flow meter 25 of the fluid separation system 1 of Fig. 2 can comprise a gear pump, wherein the sucking volume or sucking rate of the gear pump gives together with an according controlling of the control unit 17 the flow rate to be measured.

In embodiments, the total volume measured by the flow meter 25, for example, in combination with the buffer chambers 29, can be integrated to a total fluid flow. This total fluid flow measured by the flow meter 25 can be compared with a calculated total volume delivered by the flow source 13. Advantageously, by this, a leak detection can be realized. In other words, the total volume delivered to the waste 21 can be observed by the control unit 17 for leak detection purposes.

For actuating the multiplexer 23, for example an according slider of the multiplexer 23, a maltese-cross-mechanism can be used.

The fluid separation system 1 can be part of a fluidic system being or comprising at least one of the following. A chromatography system (LC), a high performance liquid chromatography (HPLC) system, an HPLC arrangement comprising a chip and a mass spectrograph (MS), a high throughput LC/MS system, a purification system, a micro fraction collection/spotting system, a system adapted for identifying proteins, a system comprising a GPC/SEC column, a nanoflow LC system, a multidimensional LC system adapted for separation of protein digests, a parallel (multi-column) LC system.

The fluid separation system 1 can be adapted for analyzing liquid. More specifically, the fluid separation system 1 can be adapted for executing at least one microfluidic process, for example an electrophoresis and/or a liquid chromatography process, for example a high performance liquid chromatography process (HPLC). Therefore, the fluid separation system 1 can be coupled to a liquid delivery system, in particular to a pump, and/or to a power source. For analyzing liquid or rather one or more components within the liquid, the fluid separation system 1 can comprise a detection area, such as an optical detection area and/or an electrical detection area being arranged close to a flow path within the fluid separation system 1. Otherwise, the fluid separation system 1 can be coupled to a laboratory apparatus, for example to a mass spectrometer, for analyzing the liquid. Besides this, the fluid separation system 1 can be a component part of a laboratory arrangement.

It is to be understood, that embodiments described are not limited to the particular component parts of the devices described or to process features of the methods described as such devices and methods may vary. It is also to be understood, that different features as described in different embodiments, for example illustrated with different Fig., may be combined to new embodiments. It is finally to be understood, that the terminology used herein is for the purposes of describing particular embodiments only and it is not intended to be limiting. It must be noted, that as used in the specification and the appended claims, the singular forms of "a", "an", and "the" include plural referents until the context clearly dictates otherwise.

## Claims

1. A fluidic system (1) comprising:
- a flow source (13) adapted for delivering a fluid,
- a plurality of flow channels (3), each being adapted for providing a fluid separation and being arranged downstream of the flow source (13),
- a flow meter (11; 25) adapted for determining a fluid flow in at least one of the flow channels (3) and being arranged downstream of the at least one of the flow channels (3), and
- a control unit (17) adapted for controlling the fluid flow in the at least one of the flow channels (3) in response to the determined fluid flow.

2. The fluidic system of the above claim, wherein the flow meter (11; 25) comprises a measuring chamber (31) adapted for running or drawing in a defined volume per time for determining the fluid flow.

3. The fluidic system of the preceding claim, comprising at least one of:
a drawing rate of the flow meter (11; 25) is controlled by the control unit (17) for determining the fluid flow;
an actual volume of the measuring chamber (31) is controlled by the control unit (17) for controlling the drawing rate.

4. The fluidic system of claim 1 or any one of the above claims, wherein each of the flow channels (3) comprises a variable flow restrictor (7) each controlled by the control unit (17) in response to the determined fluid flow/s.

5. The fluidic system of the preceding claim, wherein each of the variable flow restrictors (7) comprises at least one of:
- a valve with an adjustable throttle,
- a chopper valve, of which a duty cycle defined net restriction,
- a heat-controlled hydraulic restrictor (7).

6. The fluidic system of claim 1 or any one of the above claims, comprising at least one of:
each of the flow channels (3) comprises at least one of: a sample injector (9), a chromatography column (35), a detector (37);
a multiplexer (23) arranged downstream of the flow channels (3) and coupled to each of the flow channels (3);
a single flow meter (25) arranged downstream of the multiplexer (23) and coupled to the multiplexer (23);
a plurality of single flow meters (11), wherein each flow channel (3) comprises one of the flow meters (11);
each of the flow channels (3) comprises a buffer chamber (29) adapted for buffering a certain volume of the fluid.

7. The fluidic system of claim 1 or any one of the above claims, wherein said fluidic system is or comprises at least one of:
- a chromatography system (LC),
- a high performance liquid chromatography (HPLC) system,
- an HPLC arrangement comprising a chip and a mass spectrograph (MS),
- a high throughput LC/MS system,
- a purification system,
- a micro fraction collection/spotting system,
- a system adapted for identifying proteins,
- a system comprising a GPC/SEC column,
- a nanoflow LC system,
- a multidimensional LC system adapted for separation of protein digests,
- a parallel (multi-column) LC system.

8. A method of controlling a fluidic system having a plurality of flow channels (3), each being adapted for providing a fluid separation and being arranged downstream of a flow source (13), the method comprising:
- determining a fluid flow downstream of the at least one of the flow channels (3), and
- controlling the fluid flow in the at least one of the flow channels (3) in response to the determined fluid flow.

9. Method of the preceding claim, comprising:
- running or drawing in a defined volume per time into a measuring chamber (31) of the flow meter (25) for determining the fluid flow.

10. Method of claim 8 or any one of the above claims, comprising:
- determining the fluid flow by controlling a drawing rate of the flow meter (11; 25) by the control unit (17).

11. Method of the preceding claim, comprising at least one of:
- controlling the drawing rate by controlling an actual volume of the measuring chamber (31) by the control unit (17);
- controlling a pressure within the measuring chamber (31) by controlling the actual volume of the measuring chamber (31).

12. Method of claim 8 or any one of the above claims, comprising at least one of:
- controlling variable flow restrictors (7) of each of the flow channels (3) in response to the determined fluid flow/s;
- multiplexing the fluid flows of the plurality of flow channels (3) into an outlet of the multiplexer (23), wherein the multiplexer (23) is arranged downstream of the flow channels (3);
- measuring the flow rate of the outlet of the multiplexer (23) by the flow meter (25) arranged downstream of the multiplexer (23) and coupled to the outlet of the multiplexer (23);
- measuring the flow rate by a plurality of flow meters (11), wherein each flow channel (3) comprises one of the flow meters (11).

13. A software program or product, preferably stored on a data carrier, for controlling or executing the method of claim 8 or any one of the above claims, when run on a data processing system such as a computer.

## Amended claims

### Amended claims in accordance with Rule 86(2) EPC.

**1.** A fluidic system (1) comprising:
a flow source (13) adapted for delivering a fluid,
a plurality of flow channels (3), each being adapted for providing a fluid separation and being arranged downstream of the flow source (13),
a flow meter (11; 25) adapted for determining a fluid flow in at least one of the flow channels (3) and being arranged downstream of the at least one of the flow channels (3), and
a control unit (17) adapted for controlling the fluid flow in the at least one of the flow channels (3) in response to the determined fluid flow,
**characterized by** a multiplexer (23) arranged downstream of the flow channels (3) and coupled to each of the flow channels (3),
wherein the flow meter (25) is arranged downstream of the multiplexer (23) and coupled to the multiplexer (23);

**2.** The fluidic system of the preceding claim, wherein the flow meter (11; 25) comprises a measuring chamber (31) adapted for running ordrawing in a defined volume per time for determining the fluid flow.

**3.** The fluidic system of the preceding claim, wherein the control unit (17) is adapted to control at least one of:
a drawing rate of the flow meter (11; 25) for determining the fluid flow;
an actual volume of the measuring chamber (31) for controlling the drawing rate.

**4.** The fluidic system of claim 1 or any one of the above claims, wherein each of the flow channels (3) comprises a variable flow restrictor (7) each controlled by the control unit (17) in response to the determined fluid flow/s.

**5.** The fluidic system of the preceding claim, wherein each of the variable flow restrictors (7) comprises at least one of:
- a valve with an adjustable throttle;
- a chopper valve, of which a duty cycle defined net restriction;
- a heat-controlled hydraulic restrictor (7).

**6.** The fluidic system of claim 1 or any one of the above claims, wherein
each of the flow channels (3) comprises at least one of: a sample injector (9), a chromatography column (35), a detector (37).

**7.** The fluidic system of claim 1 or any one of the above claims, wherein said fluidic system is or comprises at least one of:
• a chromatography system (LC);
• a high performance liquid chromatography (HPLC) system;
• an HPLC arrangement comprising a chip and a mass spectrograph (MS);
• a high throughput LC/MS system;
• a purification system;
• a micro fraction collection/spotting system;
• a system adapted for identifying proteins;
• a system comprising a GPC/SEC column;
• a nanoflow LC system;
• a multidimensional LC system adapted for separation of protein digests;
• a parallel (multi-column) LC system.

**8.** A method of controlling a fluidic system having a plurality of flow channels (3), each being adapted for providing a fluid separation and being arranged downstream of a flow source (13), and a multiplexer (23) arranged downstream of the flow channels (3) and coupled to each of the flow channels (3), the method comprising:
- determining a fluid flow downstream of the multiplexer (23), and
- controlling the fluid flow in the at least one of the flow channels (3) in response to the determined fluid flow.

**9.** Method of the preceding claim, comprising:
- running or drawing in a defined volume per time into a measuring chamber (31) of the flow meter (25) for determining the fluid flow.

**10.** Method of claim 8 or any one of the above claims, comprising:
- determining the fluid flow by controlling a drawing rate of the flow meter (11; 25) by the control unit (17).

**11.** Method of the preceding claim, comprising at least one of:
- controlling the drawing rate by controlling an actual volume of the measuring chamber (31) by the control unit (17);
- controlling a pressure within the measuring chamber (31) by controlling the actual volume of the measuring chamber (31).

**12.** Method of claim 8 or any one of the above claims, comprising:
- controlling variable flow restrictors (7) of each of the flow channels (3) in response to the determined fluid flow/s.

**13.** A software program or product, preferably stored on a data carrier, for controlling or executing the method of claim 8 or any one of the above claims, when run on a data processing system such as a computer.
